Europäisches Patentamt

(19) European Patent Office

Office européen des brevets

(11) Publication number: **0 266 301 B1**

## (12) EUROPEAN PATENT SPECIFICATION

(45) Date of publication of the patent specification: 18.07.90

(21) Application number: **87630216.7**

(22) Date of filing: **29.10.87**

(51) Int. Cl.⁵: **F25B 41/06**

(54) Refrigerant metering in a variable flow system.

(30) Priority: **31.10.86 US 925758**

(43) Date of publication of application: **04.05.88 Bulletin 88/18**

(45) Publication of the grant of the patent: **18.07.90 Bulletin 90/29**

(84) Designated Contracting States: **DE FR GB IT**

(56) References cited:
DE-A- 2 061 617
US-A- 2 221 062
US-A- 2 709 340
US-A- 3 252 297
US-A- 4 341 090
US-A- 4 394 816
US-A- 4 420 947
US-A- 4 459 819
US-A- 4 546 795
US-A- 4 548 047

(73) Proprietor: **CARRIER CORPORATION, Carrier Tower 6304 Carrier Parkway P.O. Box 4800, Syracuse New York 13221(US)**

(72) Inventor: **Voorhis, Roger Joseph, 5981 Shag Bark Lane, Pennellville New York 13132(US)**
Inventor: **Marris, Derrick Allen, 1630 Goat Hollow Road, Mooresville Indiana 46158(US)**
Inventor: **Palmer, John Michael, 2024 James Street, Syracuse New York 13206(US)**

(74) Representative: **Waxweiler, Jean et al, OFFICE DENNEMEYER S.à.r.l. P.O. Box 1502, L-1015 Luxembourg(LU)**

ACTORUM AG

## Description

### Background of the Invention

This invention relates to a refrigeration system and a method of controlling the flow of refrigerant according to the first part of claims 1 and 10, resp.

In a typical refrigeration cycle, the refrigerant flow to the evaporator coil is metered by way of an expansion device which restricts the flow of refrigerant in a controlled manner to thereby control the amount of superheat in the system. Capillary tubes and thermal expansion valves (TXV's) are the most common types of expansion devices used in refrigeration systems. Capillary tubes are of fixed dimensions selected to provide the desired operational characteristics for a particular system, whereas a TXV is a variable flow device which is automatically modulated in response to superheat conditions to thereby vary the refrigerant flow in such a way as to obtain the desired superheat conditions.

Another type of expansion device used in refrigeration systems is a so-called "accurater", shown and described in U.S. Patent 3,992,898, assigned to the assignee of the present invention. That patent is hereby incorporated herein by reference. An attractive feature of this device is the ability to select and change pistons so that the orifice size can be chosen to match the desired flow characteristics of a particular system. Once installed, the piston, like a capillary tube, has a fixed dimension. But unlike a capillary tube, the accurater can be easily and economically adapted for use with any of a number of system load conditions by changing the piston size.

In US-A 4 459 819 there is described a refrigerant expansion and control device for metering the flow of refrigerant in a refrigeration system comprising a compressor, the expansion device comprising a body defining an orifice for conducting the flow or refrigerant therethrough, blockage means for selectively blocking the orifice to prevent the flow of refrigerant therethrough and modulating means for alternately applying and removing the blocking means in a controlled sequence thereby causing the blocking means to block or unblock the orifice with the ratios of blocked to unblocked time being controlled to regulate the resultant refrigerant flow through the orifice.

US-A 2 221 062 discloses an expansion valve for the refrigerant flow in a refrigeration system provided with a valve orifice and a bypass channel effecting parallel flow paths to control the refrigerant flow.

US-A 4 420 947 teaches the use of controlling means for the expansion valve and for the compressor of a heat pump air conditioning system which are substantially independent of each other.

Heretofore, refrigeration systems have primarily been operated at a single constant speed. That is, the compressor was either turned off, in which case the system was not in operation, or turned on to run at a constant speed. The expansion device as mentioned hereinabove, were therefore chosen to be compatible with the flow characteristics of that operational speed. In some cases, a two-speed compressor was used to provide two discreet levels of refrigerant flow conditions. These two flow volumes have traditionally been accommodated by a TXV which automatically provided a smaller expansion orifice when operating at the lower speed.

In an effort to optimize the operating efficiency of a refrigeration system, the applicants have applied a variable speed motor to drive a compressor. One of the characteristics of such a variable speed system is that of operating within a continuous and infinite range of speeds rather than at one or two discreet levels. Although a TXV may be responsive to vary its orifice over a range of speeds, it was not designed to operate in this manner. Accordingly, its accuracy and responsiveness have been found to be unsuitable for use in such a variable speed system. Further, the operating range of a typical TXV is not sufficient for use in such a system where the compressor is driven by a variable speed motor.

It is therefore an object of the present invention to provide an improved expansion device for a variable speed air conditioning system.

Another object of the present invention is the provision in an air conditioning system for metering the flow of refrigerant over a continuous range of compressor speeds.

Yet another object of the present invention is the provision in a variable speed air conditioning system for accurately and responsively varying the refrigerant flow with the speed.

Still another object of the present invention is the provision in a variable speed air conditioning system for an expansion device which is economical to manufacture and extremely functional in use.

To achieve this, the refrigeration system of the invention is characterized by the features claimed in the characterizing portion of claim 1 and the method of the invention is claimed in claim 10. Advantageous embodiments of the invention are claimed in the subclaims.

These objects and other features and advantages becomes more readily apparent upon reference to the following description when taken in conjunction with the appended drawings.

### Summary of the Invention

Briefly, in accordance with one aspect of the invention, an expansion device with a relatively large fixed diameter orifice is placed in the system. A movable piston is made to alternately close off and open the orifice as the piston moves. The effective orifice size is therefore varied by selective modulation of the piston movements, with the refrigerant flow rate through the orifice being determined by the ratio between the time in which the piston remains in the open position as compared with the time the piston remains in the closed position.

By another aspect of the invention, the valve piston is reciprocated by way of a solenoid which is cycled in response to the compressor motor speed. In this way, as the compressor motor speed is increased, the duty cycle of the piston is changed so as to thereby provide a larger effective orifice and a larger flow rate therethrough. Slower compressor speeds, in turn, will automatically reduce the flow rate through the expansion device.

By yet another aspect of the invention, the expansion device is provided with a bypass channel, in parallel with the flow orifice, to provide a minimum flow of refrigerant irrespective of the particular duty cycle of the valve piston at any time. In this way, it is not necessary for the piston to meter the entire refrigerant flow volume, but only that flow volume which exceeds the minimal flow volume passing through the bypass. As a result, there is no positive shutoff of the entire refrigerant flow, which would otherwise initiate pulses in the line to thereby cause vibrations. Further, since the amount of refrigerant flow through the metered orifice, and therefore the pressure drop thereacross, is substantially reduced, the life of the modulating valve is substantially increased.

By still another aspect of the invention, the modulating valve of the present invention may take the form of a uni-directional device as where only cooling is required, or, alternatively, it may be a bi-directional device, as used in a heat pump, wherein modulated metering is provided in one direction of refrigerant flow and the relatively unrestricted bypass flow is provided in the other direction of refrigerant flow.

In the drawings as hereinafter described, preferred and modified embodiments are depicted.

## Brief Description of the Drawings

Figure 1 shows a typical heat pump system into which the present invention has been incorporated.

Figure 2 shows one embodiment of the expansion device portion of the present invention.

Figure 3 shows an alternative embodiment thereof.

Figure 4 shows another alternative embodiment thereof.

## Description of the Preferred Embodiment

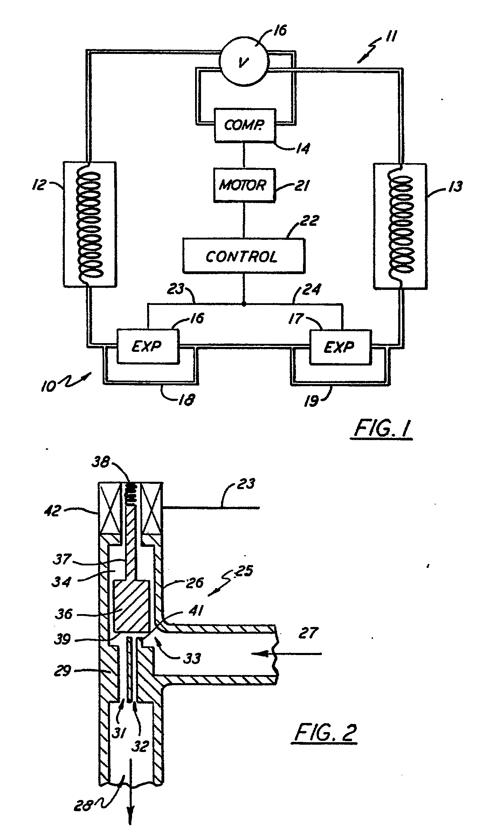

Referring now to Figure 1, the invention is shown generally at 10 as applied to a heat pump system 11 comprising an outdoor coil 12, an indoor coil 13, and a compressor 14. A reversing valve 16 is provided to selectively reverse the roles of the outdoor and indoor coils 12 and 13, respectively, when changing between heating and cooling functions of the system. Further in keeping with the dual capability of the system, there is an expansion device associated with the entrance to each of the coils 12 and 13 as shown at 16 and 17, respectively. The expansion devices 16 and 17 have bypass channels, shown schematically at 18 and 19, which allows one expansion device to be effectively bypassed when the other one is metering refrigerant to its associated evaporator coil.

Driving the compressor 14 is a motor 21 of the variable speed type. An example of such a variable speed compressor assembly which has been found suitable for this purpose is the Model CVA-0150 Variable Speed Compressor, commercially available from Copeland Corporation and controlled by an Inventor Assembly available from Carrier Corporation as Part No. 38QV400094. Another way of obtaining the variable speed capability is that of using an electrically commutated motor (ECM) of a type commercially available from General Electric Company. In any case, the speed of the motor 21 is varied by a control 22 in response to sensed ambient and system conditions. In general, the motor speed is increased for operation under high load conditions and decreased for operation under low load conditions.

In accordance with the present invention, the expansion devices 16 and 17 are adaptable for use under variable speed conditions, with the effective orifice sizes thereof being substantially proportional to the desired flow rate of the refrigerant, which in turn is proportional to the speed of the compressor motor 21. Electrical signals are sent from the control 22 along lines 23 and 24 to control the expansion devices 16 and 17 for that purpose. The particular manner in which those devices are controlled is described hereinbelow.

It should be understood that the present invention is intended for use in any refrigeration system having an expansion device for metering of refrigerant flow to the evaporator coil. For example, a single such unit can be used in a condensing unit intended for cooling only, or a pair of such units may be used in a heat pump system as shown in Figure 1.

In Figure 2 there is shown such a uni-directional expansion device or solenoid valve 25 useful in systems that are used only for cooling. The valve body 26 has an inlet opening 27 into which the refrigerant flows from the condenser coil, and a discharge opening 28 from which the refrigerant is discharged at a reduced pressure to then flow to the evaporation coil. A land portion 29 defines a bypass orifice 31 and a modulated orifice 32 which provide parallel flow paths for fluidly interconnecting the inlet opening 27 to the discharge opening 28. Thus, unless otherwise restricted as will be described hereinafter, the refrigerant is free to flow into the inlet opening 27, into the side channel 33, and through both of the bypass orifice 31 and the modulated orifice 32, and out the discharge opening 28. The bypass orifice 31 and the modulated orifice 32 are sized so as to cooperate in the metering of refrigerant flow, with the bypass orifice 31 being fixed in size and with the modulated orifice 32 having a fixed diameter but having its effective size being modulated in accordance with the present invention.

The valve body 26 defines a chamber 34 within which a piston 36 is reciprocally disposed. The piston 36 has a stem 37 which extends upwardly to be engaged at its end by a compression spring 38. The compression spring 38 tends to bias the piston 36 downwardly such that its one end 39 engages the one end 41 of the modulated orifice 32 to thereby close it off to the flow of refrigerant. The solenoid coil 42, which is energized by electrical signals long line 23, surrounds the upper end of the stem 37 as shown so as to operate, when activated, to lift the piston 26 upwardly, against the bias of the spring 38, to thereby open the modulated orifice 32 to the free flow of refrigerant therethrough. In accordance with the present invention, the electrical impulses to the coil 42 along line 23 are modulated to thereby cause the piston 36 to reciprocate in a controlled manner such that the duty cycle of open time as compared with closed time determines the effective size of the orifice and therefore the flow rate through the modulated orifice 32. To accommodate the changes in flow rates with changes in motor speed, the duty cycle is modified in response to motor speed changes.

It will be understood that, no matter what the duty cycle of the piston 36 is at any one time or whether or not it is even operating, the bypass orifice 31 will provide for a minimum flow of refrigerant whenever the compressor is in operation. This feature has been found to be very beneficial to the desired operational characteristics of the solenoid operated expansion device. That is, since the solenoid valve controls only a portion of the refrigerant flow, its life has been found to be substantially prolonged. The primary reason is that the bypass flow tends to dampen the movement of the piston 36 as it moves within its two extreme positions at the fully opened and fully closed positions. Further, the refrigerant flow in the bypass orifice 31 prevents a positive shutoff condition which would otherwise tend to end pulses through the line to set up undesirable vibrations.

In operation, until the compressor speed reaches a certain predetermined level, the piston 36 remains in its closed position to allow the entire refrigerant flow to pass through the bypass orifice 31. When that predetermined compressor speed is reached, and at all compressor speeds above that level, the piston is made to reciprocate at a relatively low frequency (e.g. .2 hertz). As the compressor speeds are increased, the duty cycle of the piston is changed accordingly so as to increase, in substantial direct proportion, the time period in which the piston is in the open position. However, the complete cycle remains at the established low frequency at all times. In this way, the flow rate of refrigerant through the expansion device is very accurately and responsively controlled. At the same time, the performance demands on the solenoid valve is minimized to thereby provide a valve with a relatively long life.

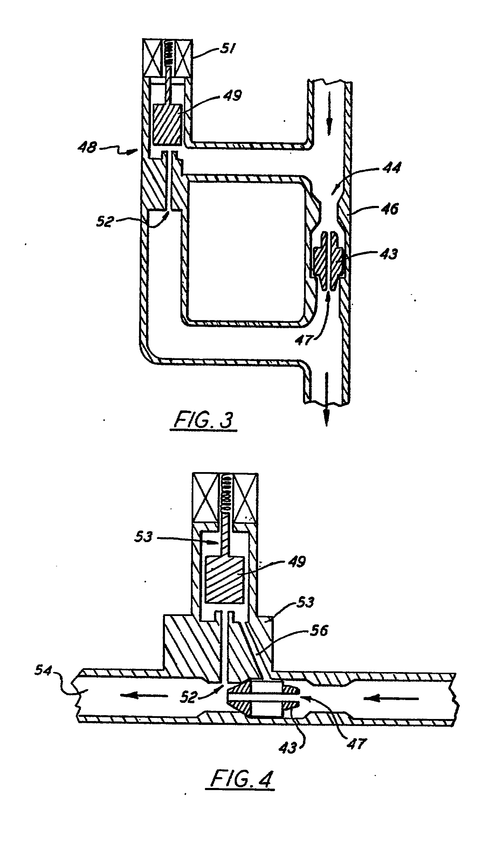

Referring now to Figure 3, there is shown, in accordance with the present invention, a form of the expansion device that is suitable for bi-directional use. In this embodiment, a piston 43 of the accurater type is mounted in the flow channel 44 of the body 46 so as to provide the bypass function described hereinabove by way of the central bore 47 in the piston 43 as shown. The piston 43 then moves within the body 46 when the refrigerant flows in the opposite direction to thereby bypass the bore in the manner which is customary for such a so-called "bypass accurater". In other words, the accurater piston 43 is used in such a manner that when it is in position as shown, it is metering the flow to provide a minimal bypass flow around the solenoid valve device 48, and when the flow direction is reversed, it provides effectively no substantial restriction of the flow through the flow channel 44. The solenoid valve 48 has a piston 49 which is modulated by a solenoid coil 51 to vary the effective size of the modulated orifice 52 in the same way as described for the solenoid valve 25 hereinabove. Thus, when the compressor is operating at relatively low speeds with the refrigerant flowing in the direction as shown, all of the refrigerant flow passes through the flow channel 44. However, when the speed of the compressor reaches a predetermined level, the piston 49 begins to oscillate to thereby open the modulated orifice 52. The total flow is them made up of both that refrigerant flowing in flow channel 44 and that flowing through the modulated orifice 52. Again, the flow of refrigerant through the bore 47 provides a damping effect to the movement of the piston 49 during these periods of operation.

In Figure 4 there is shown an alternative embodiment of the present invention as applied to a system having bi-directional flow requirements. Its function is much the same as the device shown in Figure 3; however, it provides for a mounting of the accurater piston 43 in the same body 53 as the solenoid piston 49. The body 53 not only includes the modulated orifice 52 which communicates between the chamber 53 and the discharge flow duct 54, but also includes a feed channel 56 which provides fluid communication from the area surrounding the accurater piston 43 to chamber 53.

In operation under higher speed conditions of the compressor, the piston 49 is oscillated between the open and closed positions to thereby present an open condition to the modulated orifice 52. At this time, the accurater piston 43 is in the extreme left position as shown to allow for the flow of refrigerant through the bore 47 to provide a minimal bypass flow. At the same time, the piston 47 allows refrigerant to flow around its sides and through the feed channel 56, into the chamber 53 and through the modulated orifice 52 to provide a further metered flow of refrigerant. The combined flow through the bore 47 and through the modulated orifice 52 passes along the discharge flow duct 54 to the evaporator coil at a rate which is controlled to be compatible with the compressor motor speed at the time. When the refrigerant flow is in the opposite direction, the piston 49 is in the closed position and the piston 43 is in the extreme rightward position to allow the refrigerant to flow around its periphery in a substantially unrestricted manner.

## Claims

1. A refrigeration system comprising a compressor (14) and a refrigerant expansion and control device for metering the flow of refrigerant, said device comprising a body (26) defining an orifice (32) for conducting the flow of refrigerant therethrough, blockage means (36, 38) for selectively blocking said orifice (32) to prevent the flow of refrigerant therethrough, and modulating means (22, 42) for alternately applying and removing said blocking means (36, 38) in a controlled sequence thereby causing the blocking means (36, 38) to block or unblock said orifice (32) with the ratios of blocked to unblocked time being controlled to regulate the resultant refrigerant flow through said orifice (32), characterized in that said compressor (14) is driven by a variable speed motor (21), and in that said modulating means (22, 42) selectively regulates the resultant refrigerant flow volume to a rate which is substantially proportional to the speed of said variable speed motor (21) when the compressor (14) is being driven above a predetermined speed.

2. A refrigeration system according to claim 1, characterized in including bypass means (31) for bypassing a portion of the refrigerant flow around said orifice (32).

3. A refrigeration system according to claim 1, characterized in that said body (26) further includes a bypass channel (31) in parallel with said orifice (32) for metering a minimal flow or refrigerant to thereby damp the movement of said blocking means (36, 38) during modulation.

4. A refrigeration system according to claim 1, characterized in that said blockage means (36, 38) comprises a piston (36) disposed at one end of said body (26) and movable between a biased position against said body (26) to block said orifice (32), and an open position away from said body (26).

5. A refrigeration system according to claim 1, characterized in that said modulating means (22, 42) comprises a solenoid (42) with its piston connected to said blocking means (36, 38).

6. A refrigeration system according to claim 1, further having a heat exchanger coil for transferring heat to a contained refrigerant, said orifice (32) conducting refrigerant to the evaporator coils of the refrigeration system and acting as a throttle to regulate the expansion of the refrigerant from a liquid to a gaseous state in the refrigeration system, said blocking means (36, 38) comprising a piston (36) associated with said orifice (32) and selectively movable between a closed position to block the flow to refrigerant through said orifice (32) and an opened position to expose said orifice (32) to the free flow of refrigerant therethrough, characterized in that said modulating means (22, 42) comprises a motor control means (22) responsive to sensed conditions for controlling the speed of the variable speed motor (21), valve control means (42) responsive to a signal of said motor control means (22) for selectively causing the piston (36) to alternate between the open and closed positions with the ratios of open to closed time being controlled to selectively regulate the resultant flow volume to a rate which is substantially proportional to the speed of said variable speed motor (21) when the compressor (14) is being driven above a predetermined speed.

7. A refrigeration system according to claim 6, characterized in including bypass means (31) for bypassing a portion of the refrigerant flow around said orifice (32) to thereby damp the movement of said piston (36) between its open and closed positions.

8. A refrigeration system according to claim 7, characterized in that said piston (36) is disposed at one end of said orifice (32) and includes biasing means (38) for biasing said piston (36) against said orifice (32).

9. A refrigeration system according to claim 6, characterized in that said valve control means comprising a solenoid (42).

10. A method of controlling the volume of refrigeration flow through a refrigerant expansion device in a refrigeration system having a compressor (14), comprising the steps of providing an orifice (32) for the flow of refrigerant therethrough, providing a blockage means (36, 38) for selectively blocking said orifice (32) to prevent the flow of refrigerant therethrough, and alternately applying and removing said blocking means (36, 38) with the respecitve times being controlled to a desired ratio so as to thereby control the resultant flow volume through said orifice (32), characterized by the steps of providing a variable speed motor (21) for driving the compressor (14), and selectively regulating the resultant flow volume to a rate which is substantially proportional to the speed of said variable speed motor (21) when the compressor (14) is being driven above a predetermined speed.

11. A method according to claim 10, characterized that the step of alternately applying and removing said blocking means is accomplished with a solenoid (42).

12. A method according to claim 10, characterized by an additional step of providing a bypass channel (31) around said orifice (32) to thereby bypass a portion of the refrigerant flow therearound.

## Patentansprüche

1. Kälteanlage mit einem Kompressor (14) und einer Kältemittelexpansions- und -steuervorrichtung zum Zumessen des Kältemitteldurchflusses, wobei die Vorrichtung einen Körper (26) mit einer Öffnung (32) zum Hindurchleiten des Kältemittelstroms, eine Blockiereinrichtung (36, 38) zum wahlweisen Blockieren der Öffnung (32), um das Hindurchgehen des Kältemittelstroms zu verhindern, und eine Moduliereinrichtung (22, 42) aufweist zum abwechselnden Applizieren und Entfernen der Blockiereinrichtung (36, 38) in einer gesteuerten Sequenz, um dadurch die Blockiereinrichtung (36, 38) zu veranlassen, die Öffnung (32) zu blockieren oder freizugeben, wobei die Verhältnisse von Blockierzeit zu Freigabezeit gesteuert werden, um den resultierenden Kältemitteldurchfluß durch die Öffnung (32) zu regulieren, dadurch gekennzeichnet, daß der Kompressor (14) durch einen drehzahlveränderlichen Motor (21) angetrieben wird und daß die Moduliereinrichtung (22, 42) den resultierenden Kältemitteldurchsatz wahlweise aus eine Größe reguliert, die zu der Drehzahl des drehzahlveränderlichen Motors (21) im wesentlichen proportional ist, wenn der Kompressor (14) mit einer Drehzahl angetrieben wird, die über einer vorbestimmten Drehzahl liegt.

2. Kälteanlage nach Anspruch 1, gekennzeichnet durch eine Bypasseinrichtung (31) zum Herumleiten eines Teils des Kältemittelstroms um die Öffnung (32).

3. Kälteanlage nach Anspruch 1, dadurch gekennzeichnet, daß der Körper (26) weiter einen Bypasskanal (31) parallel zu der Öffnung (32) aufweist zum Zumessen eines Mindestkältemitteldurchflusses, um dadurch die Bewegung der Blockiereinrichtung (36, 38) während der Modulation zu dämpfen.

4. Kälteanlage nach Anspruch 1, dadurch gekennzeichnet, daß die Blockiereinrichtung (36, 38) einen Kolben (36) aufweist, der an einem Ende des Köpers (26) angeordnet und zwischen einer vorgespannten Position an dem Körper (26) zum Blockieren der Öffnung (32) und einer offenen Position entfernt von dem Körper (26) bewegbar ist.

5. Kälteanlage nach Anspruch 1, dadurch gekennzeichnet, daß die Moduliereinrichtung (22, 42) eine Magnetspule (42) aufweist, deren Kolben mit der Blockiereinrichtung (36, 38) verbunden ist.

6. Kälteanlage nach Anspruch 1, mit einer Wärmetauscherschlange zum Übertragen von Wärme auf ein darin enthaltenes Kältemittel, wobei die Öffnung (32) Kältemittel zu den Verdampferschlangen der Käleanlage leitet und als eine Drosseleinrichtung wirkt, um die Expansion des Kältemittels aus einem flüssigen in einen gasförmigen Zustand in der Kälteanlage zu regulieren, wobei die Blockiereinrichtung (36, 38) einen Kolben (36) aufweist, welcher der Öffnung (32) zugeordnet und wahlweise zwischen einer geschlossenen Position zum Blockieren des Durchflusses von Kältemittel durch die Öffnung (32) und einer geöffneten Position zum Freigeben der Öffnung (32) für den freien Durchfluß von Kältemittel bewegbar ist, dadurch gekennzeichnet, daß die Moduliereinrichtung (22, 42) eine Motorsteuereinrichtung (22) aufweist, die auf abgefühlte Bedingungen anspricht, um die Drehzahl des drehzahlveränderlichen Motors (21) zu steuern, eine Ventilsteuereinrichtung (42), die auf ein Signal der Motorsteuereinrichtung (22) hin wahlweise bewirkt, daß der Kolben (36) sich zwischen der offenen und der geschlossenen Position hin- und herbewegt, wobei die Verhältnisse der Offenzeit zur Schließzeit gesteuert werden, um den resultierenden Durchsatz wahlweise auf eine Größe zu regulieren, die zu der Drehzahl des drehzahlveränderlichen Motors (21) im wesentlichen proportional ist, wenn der Kompressor (14) mit einer Drehzahl angetrieben wird, die über einer vorbestimmten Drehzahl liegt.

7. Kälteanlage nach Anspruch 6, gekennzeichnet durch eine Bypasseinrichtung (31) zum Herumleiten eines Teils des Kältemittelstroms um die Öffnung (32), um dadurch die Bewegung des Kolbens (36) zwischen seiner offenen und seiner geschlossenen Position zu dämpfen.

8. Kälteanlage nach Anspruch 7, dadurch gekennzeichnet, daß der Kolben (36) an einem Ende der Öffnung (32) angeordnet ist und eine Vorspanneinrichtung (38) aufweist zum Vorspannen des Kolbens (36) gegen die Öffnung (32).

9. Kälteanlage nach Anspruch 6, dadurch gekennzeichnet, daß die Ventilsteuereinrichtung eine Magnetspule (42) aufweist.

10. Verfahren zum Steuern des Kältemitteldurchsatzes durch eine Kältemittelexpansionsvorrichtung in einer Kälteanlage mit einem Kompressor (14), beinhaltend die Schritte: Bereitstellen einer Öffnung (32) für den Durchfluß von Kältemittel, Bereitstellen einer Blockiereinrichtung (36, 38) zum wahlweisen Blockieren der Öffnung (32), um den Kältemitteldurchfluß zu verhindern, und abwechselndes Applizieren und Entfernen der Blockiereinrichtung (36, 38), wobei die zugeordneten Zeiten auf ein derartiges Verhältnis eingestellt werden, daß dadurch der resultierende Durchsatz durch die Öffnung (32) gesteuert wird, gekennzeichnet durch die Schritte: Bereitstellen eines drehzahlveränderlichen Motors (21) zum Antrieben des Kompressors (14) und wahlweises Regulieren des resultierenden Durchsatzes auf eine Größe, die zu der Drehzahl des drehzahlveränderlichen Motors (21) im wesentlichen proportional ist, wenn der Kompressor (14) mit einer Drehzahl oberhalb einer vorbestimmten Drehzahl angetrieben wird.

11. Verfahren nach Anspruch 10, dadurch gekennzeichnet, daß der Schritt des abwechselnden Applizierens und Entfernens der Blockiereintung mit einer Magnetspule (42) ausgeführt wird.

12. Verfahren nach Anspruch 10, gekennzeichnet durch einen zusätzlichen Schritt: Bereitstellen eines Bypasskanals (31) um die Öffnung (32), um dadurch einen Teil des Kältemittelstroms um diese herumzuleiten.

**Revendications**

1. Système de réfrigération comprenant un compresseur (14), ainsi qu'un dispositif de réglage et d'expansion de réfrigérant afin de mesurer l'écoulement du réfrigérant, ce dispositif comprenant un corps (26) définissant un orifice (32) en vue de canaliser l'écoulement du réfrigérant au travers, des moyens de blocage (36, 38) en vue de bloquer sélectivement cet orifice (32) afin d'empêcher l'écoulement du réfrigérant au travers, ainsi que des moyens de modulation (22, 42) en vue d'appliquer alternativement et d'éliminer ces moyens de blocage (36, 38) en une séquence réglée, amenant ainsi les moyens de blocage (36, 38) à bloquer ou à débloquer cet orifice (32), les rapports entre le temps de blocage et le temps de déblocage étant contrôlés de façon à régler le débit de réfrigérant qui en résulte à travers l'orifice (32), caractérisé en ce que le compresseur (14) est entraîné par un moteur à vitesse variable (21), et en ce que les moyens de modulation (22, 42) règlent sélectivement le volume d'écoulement de réfrigérant qui en résulte, à un débit qui est pratiquement proportionnel à la vitesse du moteur à vitesse variable (21) lorsque le compresseur (14) est entraîné au-delà d'une vitesse prédéterminée.

2. Système de réfrigération selon la revendication 1, caractérisé en ce qu'il comprend un moyen de dérivation (31) en vue de dériver une partie de l'écoulement de réfrigérant autour de l'orifice (32).

3. Système de réfrigération selon la revendication 1, caractérisé en ce que le corps (26) comprend, en outre, un canal de dérivation (31) monté en parallèle avec l'orifice (32) afin de mesurer un écoulement minimum de réfrigérant pour amortir de la sorte le mouvement des moyens de blocage (36, 38) au cours de la modulation.

4. Système de réfrigération selon la revendication 1, caractérisé en ce que les moyens de blocage (36, 38) comprennent un piston (36) disposé à une extrémité du corps (26) et pouvant se déplacer entre une position de poussée contre le corps (26) afin de bloquer l'orifice (32), et une position d'ouverture située à l'écart du corps (26).

5. Système de réfrigération selon la revendication 1, caractérisé en ce que les moyens de modulation (22, 42) comprennent un solénoïde (42) dont le piston est raccordé aux moyens de blocage (36, 38).

6. Système de réfrigération selon la revendication 1, comportant, en outre, un serpentin échangeur de chaleur en vue de transférer la chaleur vers un réfrigérant qui y est contenu, cet orifice (32) conduisant le réfrigérant vers les serpentins d'évaporateur du système de réfrigération, tout en faisant office d'étranglement pour régler l'expansion du réfrigérant d'un liquide jusqu'à état gazeux dans le système de réfrigération, ces moyens de blocage (36, 38) comprenant un piston (36) associé à cet orifice (32) et pouvant se déplacer sélectivement entre une position de fermeture en vue de bloquer l'écoulement vers le réfrigérant à travers cet orifice (32), et une position d'ouverture afin d'exposer cet orifice (32) à l'écoulement libre du réfrigérant au travers, caractérisé en ce que les moyens de modulation (22, 42) comprennent un moyen de réglage de moteur (22) réagissant aux conditions détectées en vue de régler la vitesse du moteur à vitesse variable (21), un moyen de réglage de soupape (42) réagissant à un signal de ce moyen de réglage de moteur (22) afin d'amener sélectivement le piston (36) à alterner entre les positions d'ouverture et de fermeture, les rapports entre le temps d'ouverture et le temps de fermeture étant contrôlés de façon à régler sélectivement le volume d'écoulement qui en résulte à un débit qui est pratiquement proportionnel à la vitesse du moteur à vitesse variable (21) lorsque le compresseur (14) est entraîné au-delà d'une vitesse prédéterminée.

7. Système de réfrigération selon la revendication 6, caractérisé en ce qu'il comprend un moyen de dérivation (31) en vue de dériver une partie de l'écoulement de réfrigérant autour de l'orifice (32), de façon à amortir le mouvement du piston (36) entre les positions d'ouverture et de fermeture.

8. Système de réfrigération selon la revendication 7, caractérisé en ce que le piston (36) est disposé à une extrémité de l'orifice (32) et comprend un moyen (38) en vue de pousser le piston (36) contre l'orifice (32).

9. Système de réfrigération selon la revendication 6, caractérisé en ce que le moyen de commande de soupape comprend un solénoïde (42).

10. Procédé en vue de régler le volume d'écoulement de réfrigération à travers un dispositif d'expansion de réfrigérant dans un système de réfrigération comportant un compresseur (14), ce procédé comprenant les étapes consistant à prévoir un orifice (32) pour l'écoulement du réfrigérant au travers, prévoir des moyens de blocage (36, 38) en vue de boquer sélectivement cet orifice (32) pour empêcher l'écoulement du réfrigérant au travers, et alternativement appliquer et retirer ces moyens de blocage (36, 38) avec les laps de temps respectifs devant être réglés à un rapport désiré de façon à régler le volume d'écoulement qui en résulte à travers cet orifice (32), caractérisé en ce qu'il comprend les étapes qui consistent à prévoir un moteur à vitesse variable (21) en vue d'entraîner le compresseur (14), et régler sélectivement le volume d'écoulement qui en résulte, à un débit qui est pratiquement proportionnel à la vitesse du moteur à vitesse variable (21) lorsque le compresseur (14) est entraîné au-delà d'une vitesse prédéterminée.

11. Procédé selon la revendication 10, caractérisé en ce que l'étape consistant à appliquer et retirer alternativement les moyens de blocage est effectuée avec un solénoïde (42).

12. Procédé selon la revendication 10, caractérisé en ce qu'il comprend l'étape supplémentaire consistant à prévoir un canal de dérivation (31) autour de l'orifice (32), de façon à dériver, tout autour, une partie de l'écoulement de réfrigérant.

FIG. I

FIG. 2

*FIG. 3*

*FIG. 4*